# EUROPÄISCHE PATENTANMELDUNG

(11) **EP 2 562 206 A1**
(43) Veröffentlichungstag der Anmeldung: **27.02.2013**
(21) Anmeldenummer: 12181476.8
(22) Anmeldetag: 23.08.2012
(51) Int. Cl.: C08J 5/24, C08J 5/04, C08K 7/06, C08K 3/04, C08J 11/06

(54) **Verfahren zur Herstellung eines Formteils aus carbonfaserverstärktem Kunststoff unter Verwendung von wiederverwertetem carbonfaserverstärktem Kunststoff**

(30) Priorität: 23.08.2011 DE 102011081374
(71) Anmelder: SGL Carbon SE, 65201 Wiesbaden (DE)
(72) Erfinder: Köhler, Sandra, 86405 Meitingen (DE); Milovukovic, Sinisa, 86405 Meitingen (DE); Dr. Christ, Martin, 86405 Meitingen (DE); Dr. Öttinger, Oswin, 86405 Werner-von-Siemens-Str. 18 (DE)

(57) **Zusammenfassung**

Ein Verfahren zur Herstellung eines Formteils aus carbonfaserverstärktem Kunststoff umfasst die nachfolgenden Schritte:
a) Zerkleinern von Abfallteilen und/oder Ausschussteilen aus einem carbonfaserverstärkten Kunststoff, dessen Matrix wenigstens einen Duroplast enthält,
b) Zugabe eines Bindemittels und ggf. von Carbonfasern zu dem in dem Schritt a) erhaltenen, zerkleinerten Produkt und Vermischen der Bestandteile, wobei das Bindemittel aus der Gruppe ausgewählt wird, welche aus Duroplastvorläufern, Thermoplasten, Elastomeren, Elastomervorläufern, Duroplasten und beliebigen Mischungen aus zwei oder mehr der vorstehenden Verbindungen besteht, sowie
c) Formen der in dem Schritt b) erhaltenen Mischung zu einem Formteil aus carbonfaserverstärktem Kunststoff.

## Beschreibung

Die vorliegende Erfindung betrifft ein Verfahren zur Herstellung eines Formteils aus carbonfaserverstärktem Kunststoff, ein durch dieses Verfahren erhältliches Formteil sowie dessen Verwendung.

Formteile aus Werkstoffen auf Basis von carbonfaserverstärktem Kunststoff (CFK), also einem Verbundwerkstoff, bei dem Carbonfasern in einer Kunststoffmatrix eingebettet sind, werden auf einer Vielzahl von technischen Gebieten eingesetzt. Ein Beispiel hierfür sind Werkzeugformen, wie Laminierformen insbesondere zur Herstellung von CFK-Bauteilen über die Laminierroute, bei der in der Laminierform mehrere CFK-Prepregs übereinander laminiert und bei einer Temperatur von üblicherweise über 100°C und einem Druck von beispielsweise 2 bar ausgehärtet und zu dem gewünschten Formteil geformt werden. Dabei ist es wesentlich, dass solche Laminierformen einen Wärmeausdehnungskoeffizienten aufweisen, welcher dem des zu formenden Materials entspricht oder diesem zumindest annähernd entspricht, weil sich bei der Temperatur- und Druckbehandlung während des Aushärtens und Formens ansonsten Spannungen ergeben, welche zu Materialschäden in dem zu formenden Formteil führen können. Herkömmlicherweise werden solche Laminierformen aus CFK oder Invar, also einer Eisen-Nickel-Legierung mit einem Nickelgehalt von etwa 36 %, gefertigt. Allerdings sind sowohl CFK, und zwar aufgrund der darin enthaltenen Carbonfasern, als auch Invar sehr teuer. Aufgrund dessen besteht ein Bedarf nach einem kostengünstigen Verfahren zur Herstellung solcher Formteile.

Aus diesem Grund sind bereits Verfahren zur Herstellung von CFK-Formteilen aus CFK-Abfällen vorgeschlagen worden, bei denen durch Abtrennen des Matrixmaterials aus den CFK-Abfällen zunächst Carbonfasern recycelt werden, bevor die so gewonnenen Carbonfasern mit Bindemittel versetzt und durch Aushärten sowie Formen zu CFK-Formteilen verarbeitet werden. Bei CFK-Abfällen, deren Matrix aus Thermoplast besteht, wird die Abtrennung des Matrixmaterials von den Carbonfasern einfach durch Erhitzen des CFK's auf eine oberhalb der Schmelztemperatur des Thermoplasten liegende Temperatur und durch anschließende mechanische Trennung der Carbonfasern von der Thermoplastschmelze erreicht. Der so gewonnene Thermoplast kann dann als Bindemittel eingesetzt werden, so dass bei diesem Verfahren der CFK-Abfall vollständig, d.h. sowohl dessen Faseranteil als auch dessen Matrixanteil, wiederverwertet werden können. Hingegen erfolgt die Abtrennung des Matrixmaterials bei CFK-Abfällen, deren Matrix aus Duroplast besteht oder Duroplast enthält, üblicherweise durch Solvolyse, also durch chemische Zersetzung der Duroplastmoleküle durch Reaktion mit einem geeigneten Reagenz, oder durch Pyrolyse, also durch thermische Zersetzung der Duroplastmoleküle, und durch optionale anschließende mechanische Trennung der Carbonfasern von dem zersetzten Duroplast. Mithin wird bei den bekannten Verfahren zur Herstellung von Formteilen aus CFK-Abfällen, deren Matrix aus Duroplast besteht oder Duroplast enthält, das Matrixmaterial zerstört und dieses kann deswegen nicht wiederverwertet werden.

Aufgabe der vorliegenden Erfindung ist es daher, ein Verfahren zur Herstellung eines Formteils auf Basis von carbonfaserverstärktem Kunststoff bereitzustellen, welches einfach und insbesondere kostengünstig durchzuführen ist, bei welchem CFK-Abfallmaterial, dessen Matrix Duroplast enthält, in hohem Ausmaß wiederverwertet wird, bei welchem der Wärmeausdehnungskoeffizient und der Anisotropiegrad des Wärmeausdehnungskoeffizienten des hergestellten Formteils einfach auf einen nahezu beliebigen Wert eingestellt werden können, und mit welchem ein Formteil erhalten wird, welches die zur Verwendung als Werkzeugform und insbesondere als Laminierform notwendigen mechanischen Eigenschaften aufweist.

Erfindungsgemäß wird diese Aufgabe gelöst durch ein Verfahren zur Herstellung eines Formteils aus carbonfaserverstärktem Kunststoff, welches die nachfolgenden Schritte umfasst:
a) Zerkleinern von Abfallteilen und/oder Ausschussteilen aus einem carbonfaserverstärkten Kunststoff, dessen Matrix wenigstens einen Duroplast enthält,
b) Zugabe eines Bindemittels und ggf. von Carbonfasern zu dem in dem Schritt a) erhaltenen, zerkleinerten Produkt und Vermischen der Bestandteile, wobei das Bindemittel aus der Gruppe ausgewählt wird, welche aus Duroplastvorläufern, Thermoplasten, Elastomeren, Elastomervorläufern, Duroplasten und beliebigen Mischungen aus zwei oder mehr der vorstehenden Verbindungen besteht, sowie
c) Formen der in dem Schritt b) erhaltenen Mischung zu einem Formteil aus carbonfaserverstärktem Kunststoff.

Diese Lösung basiert auf der überraschenden Erkenntnis, dass durch ein Verfahren, bei dem Abfallteile bzw. Ausschussteile aus einem carbonfaserverstärkten Kunststoff, dessen Matrix wenigstens einen Duroplast enthält, zerkleinert werden und das zerkleinerte Produkt ohne chemische und/oder mechanische Abtrennung des Matrixmaterials von den Carbonfasern und ohne chemische und/oder thermische Zersetzung des Matrixmaterials, beispielsweise durch Pyrolyse, mit Bindemittel und ggf. Carbonfasern vermischt wird, bevor diese Mischung zu einem Formteil geformt wird, auf einfache und insbesondere kostengünstige Weise ein Formteil erhalten wird, welches hervorragende mechanische Eigenschaften aufweist, weswegen dieses u.a. hervorragend zur Verwendung als Werkzeugform und insbesondere als Laminierform geeignet ist. Dabei können in dem erfindungsgemäßen Verfahren sowohl der Wärmeausdehnungskoeffizient als auch der Anisotropiegrad des Wärmeausdehnungskoeffizienten, also das Verhältnis des Wärmeausdehnungskoeffizienten parallel zu dem Wärmeausdehnungskoeffizienten senkrecht zu der bei der Formgebung angelegten Pressrichtung bzw. der Extrusionsrichtung im Falle einer Formgebung durch Extrusion, des Formteils durch geeignete Auswahl der Art und Menge des in dem Verfahrensschritt b) zugegebenen Bindemittels, der Art, Menge und Länge der in dem Verfahrensschritt b) optional zugegebenen Carbonfasern, der Größe des in dem Verfahrensschritt a) hergestellten zerkleinerten Produkts sowie durch den bei der Formgebung angelegten Druck in einem physikalisch vorteilhaften Bereich eingestellt werden. Beispielsweise kann der Wärmeausdehnungskoeffizient des Formteils zwischen -1·10⁻⁷ K⁻¹ und +6·10⁻⁵ K⁻¹ betragen und kann der Anisotropiegrad des Formteils zwischen 1/300 und 300 betragen. Ein weiterer Vorteil des erfindungsgemäßen Verfahrens liegt darin, dass die in dem Verfahrensschritt a) eingesetzten Abfallteile bzw. Ausschussteile aus carbonfaserverstärktem Kunststoff, dessen Matrix wenigstens einen Duroplast enthält, im Wesentlichen vollständig verwertet werden und insbesondere auch dessen Matrixmaterial verwertet wird. Aus diesem Grund ist nicht nur die Recyclingquote höher als bei den aus dem Stand der Technik bekannten Verfahren. Vielmehr wird dadurch auch eine einfachere, weniger aufwendige und insbesondere auch kostengünstigere Verfahrensführung erreicht, weil im Gegensatz zu den aus dem Stand der Technik bekannten Verfahren bei den in dem Verfahrensschritt a) eingesetzten Abfallteilen bzw. Ausschussteilen keine Abtrennung der Matrix, beispielsweise durch Solvolyse oder Pyrolyse des Matrixmaterials, von den Carbonfasern erfolgt. Bei dem erfindungsgemäßen Verfahren handelt es sich mithin nicht nur um ein Verfahren zur Herstellung eines Formteils aus carbonfaserverstärktem Kunststoff, sondern insbesondere auch um ein Verfahren zum Wiederverwerten bzw. Recyclen von Abfallteilen bzw. Ausschussteilen aus einem carbonfaserverstärkten Kunststoff.

Ein weiterer Vorteil des erfindungsgemäßen Verfahrens ist es, dass in dem Verfahrensschritt a) alle Abfallteile und/oder Ausschussteile aus CFK eingesetzt und bereitgestellt werden können, ohne dass speziell CFK-Abfallteile und/oder Ausschussteile mit einem vorgegebenen Matrixgehalt oder Fasergehalt eingesetzt oder bereitgestellt werden müssen. Aus diesem Grund ist es bei dem erfindungsgemäßen Verfahren insbesondere nicht erforderlich, CFK-Abfallteile und/oder Ausschussteile hinsichtlich des Matrixgehalts oder Fasergehalts zu fraktionieren. Gemäß einer bevorzugten Ausführungsform umfasst das erfindungsgemäße Verfahren daher keinen Verfahrensschritt, in welchem eine Auswahl hinsichtlich des Matrix- und/oder Fasergehalts des in dem Verfahrensschritt a) eingesetzten bzw. erhaltenen, zerkleinerten Produkts erfolgt.

Zum Zerkleinern der Abfallteile oder Ausschussteile in dem Verfahrensschritt a) können alle dem Fachmann bekannten Vorrichtungen eingesetzt werden, welche carbonfaserverstärkten Kunststoff zerkleinern können. Nicht beschränkende Beispiele hierfür sind Shredder, Schneidmühlen, Prallmühlen und Hammermühlen.

Wie vorstehend dargelegt, übt die Größe des in dem Verfahrensschritt a) hergestellten zerkleinerten Produkts einen gewissen Einfluss auf den Wärmeausdehnungskoeffizienten sowie insbesondere auch auf den Anisotropiegrad des Wärmeausdehnungskoeffizienten des mit dem erfindungsgemäßen Verfahren hergestellten Formteils aus. Um diesbezüglich gute Ergebnisse zu erhalten und auch, um in dem Verfahrensschritt b) eine gute Vermischung des in dem Verfahrensschritt a) hergestellten zerkleinerten Produkts mit dem Bindemittel und den optional zugesetzten Carbonfasern zu erhalten, werden die Abfallteile bzw. Ausschussteile aus dem carbonfaserverstärkten Kunststoff in dem Verfahrensschritt a) bevorzugt vornehmlich zu Partikeln mit einer Länge zwischen 20 µm und 50 mm und besonders bevorzugt zwischen 50 µm und 20 mm zerkleinert. Unter vornehmlich wird in diesem Zusammenhang verstanden, dass mehr als 50 Gew.-%, bevorzugt wenigstens 75 Gew.-%, insbesondere bevorzugt wenigstens 90 Gew.-%, besonders bevorzugt wenigstens 95 Gew.-% und ganz besonders bevorzugt alle der nach dem Zerkleinern vorliegenden Partikel eine Länge zwischen 20 µm und 50 mm und bevorzugt zwischen 50 µm und 20 mm aufweisen. Grundsätzlich richten sich längere Partikel bei dem späteren Formen bei einem Uniaxial-Pressverfahren tendenziell stärker in der Richtung senkrecht zu der bei der Formgebung angelegten Pressrichtung oder bei einem Extrusionsverfahren tendenziell stärker in der Extrusionsrichtung aus, weswegen das Formteil bei der Verwendung längerer Partikel einen größeren Anisotropiegrad des Wärmeausdehnungskoeffizienten aufweist als ein durch Verwenden kürzerer Partikel erhaltenes Formteil. Dabei können die einzelnen Partikel jede beliebige Geometrie aufweisen. Beispielsweise können diese in der Form von Blättchen mit beispielsweise rechteckigem Querschnitt vorliegen oder zylinderförmig oder faserförmig ausgestaltet sein.

Gemäß einer weiteren bevorzugten Ausführungsform der vorliegenden Erfindung wird der Verfahrensschritt a) so durchgeführt, dass das zerkleinerte Produkt neben den zerkleinerten Partikeln nur vergleichsweise geringe Mengen Staub enthält. Zu diesem Zweck kann während oder nach dem Zerkleinern Staub aus dem Produkt ausgesiebt werden. Unter Staub werden in diesem Zusammenhang Teilchen bzw. Partikel mit einer mittleren Teilchen- bzw. Partikelgröße von weniger als 100 µm verstanden. Vorzugsweise wird das Zerkleinern in dem Verfahrensschritt a) so durchgeführt, dass das Produkt nach dem Zerkleinern weniger als 5 Gew.-% Staubpartikel mit einer mittleren Partikelgröße von weniger als 100 µm enthält, was regelmäßig durch Sieben erreicht werden kann.

Ferner wird es in Weiterbildung des Erfindungsgedankens vorgeschlagen, in dem Verfahrensschritt a) Abfallteile und/oder Ausschussteile aus einem carbonfaserverstärkten Kunststoff einzusetzen, der aus 10 bis 80 Vol.-% und bevorzugt aus 40 bis 60 Vol.-% Carbonfasern und Rest auf 100 Vol.-% Matrix zusammengesetzt ist. Dadurch wird zum einen eine vergleichsweise hohe Menge an Carbonfasern über die Abfallteile und/oder Ausschussteile in die in dem Verfahrensschritt b) hergestellte Mischung eingebracht, so dass die Menge an in dem Verfahrensschritt einzusetzenden zusätzlichen Carbonfasern vergleichsweise gering gehalten werden kann. Zum anderen wird dadurch ein geeigneter Wärmeausdehnungskoeffizient begünstigt.

Grundsätzlich kann die Matrix der in dem Verfahrensschritt a) eingesetzten CFK-Abfallteile bzw. -Ausschussteile neben Duroplast alle anderen Arten von Matrixmaterial enthalten, wie beispielsweise ein oder mehrere Elastomere und/oder ein oder mehrere Thermoplaste. Vorzugsweise besteht jedoch die Matrix der in dem Verfahrensschritt a) eingesetzten CFK-Abfallteile bzw. -Ausschussteile aus einer Mischung aus einem oder mehreren Duroplasten und einem oder mehreren Thermoplasten, wobei es besonders bevorzugt ist, dass die Matrix der in dem Verfahrensschritt a) eingesetzten CFK-Abfallteile bzw. -Ausschussteile ausschließlich aus einem oder mehreren Duroplasten und ganz besonders bevorzugt aus einem Duroplast besteht.

Grundsätzlich kann die Matrix der in dem Verfahrensschritt a) eingesetzten CFK-Abfallteile bzw. -Ausschussteile alle Arten von Duroplast enthalten. Insbesondere im Hinblick auf eine spätere Verwendung des mit dem erfindungsgemäßen Verfahrens hergestellten Formteils als Werkzeugform oder als Laminierform insbesondere zur Herstellung von Bauteilen aus carbonfaserverstärktem Kunststoff durch Laminierung von Prepregs hat es sich jedoch als vorteilhaft erwiesen, in dem Verfahrensschritt a) Abfallteile und/oder Ausschussteile aus einem carbonfaserverstärkten Kunststoff einzusetzen, dessen Matrix einen Duroplast enthält, welcher aus der Gruppe ausgewählt wird, welche aus Phenolharzen, Epoxidharzen, Furanharzen, Phenylesterharzen, Vinylesterharzen, duroplastischen Polyesterharzen, Cyanesterharzen, Benzoxazinharzen, Bismaleimidharzen und beliebigen Mischung aus zwei oder mehr der vorgenannten Duroplaste besteht. Insbesondere ist es bevorzugt, dass die Matrix der CFK-Abfallteile bzw. -Ausschussteile aus einem der vorgenannten Duroplaste besteht.

Sofern die Matrix der in dem Verfahrensschritt a) eingesetzten CFK-Abfallteile bzw. -Ausschussteile neben Duroplast auch Thermoplast enthält, ist es bevorzugt, dass der Thermoplast aus der Gruppe ausgewählt wird, welche aus Polyethylenen, Polypropylenen, Polystyrolen, Polycarbonaten, Polyamiden, Acrylnitril-Butadien-Styrol und beliebigen Mischungen aus zwei oder mehr der vorgenannten Thermoplaste besteht. Hierbei können die betreffenden Copolymere mitumfasst sein. Abgesehen davon können in der Matrix der CFK-Abfallteile bzw. -Ausschussteile jedoch auch andere dem Fachmann bekannten Thermoplaste enthalten sein.

Grundsätzlich können in dem Verfahrensschritt b) als Bindemittel alle dem Fachmann als Matrixmaterialien für carbonfaserverstärkte Kunststoffe bekannten Verbindungen eingesetzt werden. Gute Ergebnisse werden insbesondere erhalten, wenn das Bindemittel ein oder mehrere Duroplastvorläufern und/oder ein oder mehrere Thermoplasten enthält oder bevorzugt daraus besteht. Gemäß einer besonders bevorzugten Ausführungsform der vorliegenden Erfindung wird in dem Verfahrensschritt b) als Bindemittel ein Vorläufer für einen Duroplasten eingesetzt, welcher aus der Gruppe ausgewählt wird, welche aus Phenolharzen, Epoxidharzen, Furanharzen, Phenylesterharzen, Vinylesterharzen, duroplastischen Polyesterharzen, Cyanesterharzen, Benzoxazinharzen, Bismaleimidharzen und beliebigen Mischungen aus zwei oder mehr der vorgenannten Duroplaste besteht.

Beispiele für geeignete Duroplastvorläufersysteme sind:
i) eine Mischung, welche wenigstens ein Monomer, wenigstens einen Katalysator und ggf. wenigstens einen Vernetzer enthält,
ii) eine Mischung, welche wenigstens ein Oligomer, wenigstens einen Katalysator und ggf. wenigstens einen Vernetzer enthält,
iii) eine Mischung, welche wenigstens ein teilvernetztes Polymer, wenigstens einen Katalysator und ggf. wenigstens einen Vernetzer enthält, oder
iv) eine Mischung, welche wenigstens ein Monomer, wenigstens ein Oligomer und/oder wenigstens ein teilvernetztes Polymer, wenigstens einen Katalysator und ggf. wenigstens einen Vernetzer enthält.

Als Oligomer wird in diesem Zusammenhang ein Molekül bezeichnet, das zwischen 2 und weniger als 100 strukturell gleiche Wiederholungseinheiten enthält. Hingegen wird als Polymer ein Molekül bezeichnet, welches wenigstens 100 strukturell gleiche Wiederholungseinheiten enthält.

Aus Kompatibilitätsgründen und auch im Hinblick auf einen geeigneten Wärmeausdehnungskoeffizienten wird es in Weiterbildung des Erfindungsgedankens vorgeschlagen, in dem Verfahrensschritt b) als Bindemittel einen Vorläufer für einen Duroplasten einzusetzen, welcher dem in der Matrix des in dem Verfahrensschritt a) eingesetzten carbonfaserverstärkten Kunststoffs enthaltenen Duroplast entspricht.

Sofern in dem Verfahrensschritt b) als Bindemittel ein Thermoplast eingesetzt wird, ist es bevorzugt, dass dieser aus der Gruppe ausgewählt wird, welche aus Polyethylenen, Polypropylenen, Polystyrolen, Polycarbonaten, Polyamiden, Acrylnitril-Butadien-Styrol und beliebigen Mischungen aus zwei oder mehr der vorgenannten Thermoplaste besteht.

Aufgrund des Zusatzes von Bindemittel zu den in dem Verfahrensschritt a) erhaltenen zerkleinerten CFK-Abfallteilen bzw. Ausschussteilen wird der Carbonfaseranteil des in dem Verfahrensschritt a) eingesetzten CFK's verringert. Falls der so reduzierte Carbonfaseranteil für die spätere Verwendung des mit dem erfindungsgemäßen Verfahrens hergestellten Formteils zu niedrig ist, können der Mischung aus in dem Verfahrensschritt a) erhaltenen zerkleinerten CFK-Abfallteilen bzw. Ausschussteilen und Bindemittel in dem Verfahrensschritt b) zusätzlich Carbonfasern zugesetzt werden. Bei diesen Carbonfasern kann es sich um neu hergestellte Carbonfasern handeln. Solche Carbonfasern können beispielsweise hergestellt werden, indem eine Kohlenstoffvorläufer, wie Viskose, Polyacrylnitril oder Pech, enthaltende Lösung durch eine Spinndüse zu einer Vorläuferfaser versponnen wird und die so erhaltene Vorläuferfaser anschließend durch eine oxidative Wärmebehandlung stabilisiert und dann carbonisiert sowie ggf. graphitiert wird.

Alternativ oder zusätzlich zu dem Zusatz von neu hergestellten Carbonfasern können in dem Verfahrensschritt b) auch Recyclat-Carbonfasern eingesetzt werden. Diese Recyclat-Carbonfasern können noch einen Teil der zersetzten Matrix aufweisen. Um für das erfindungsgemäße Verfahren eine besonders hohe Recyclingquote zu erreichen, ist es ganz besonders bevorzugt, in dem Verfahrensschritt b) ausschließlich Recyclat-Carbonfasern einzusetzen. Diese Recyclat-Carbonfasern können beispielsweise aus CFK-Abfallteilen und/oder CFK-Ausschussteilen hergestellt werden, indem diese Abfall- bzw. Ausschussteile zerkleinert werden, dann das Matrixmaterial dieser zerkleinerten Abfall- bzw. Ausschussteile durch Solvolyse und/oder Pyrolyse zersetzt wird und anschließend das zersetzte Matrixmaterial von den Carbonfasern abgetrennt wird. Beispielsweise kann die Pyrolyse bei einer Temperatur zwischen 500 und 1.000°C in sauerstofffreier Atmosphäre durchgeführt werden. Hingegen wird die Solvolyse in einer sauerstofffreien Atmosphäre in der Gegenwart einer mit dem Matrixmaterial unter Zersetzung des Matrixmaterials reagierenden Verbindung, wie beispielsweise Decalin oder Tetralin, durchgeführt. Das Abtrennen des durch Solvolyse bzw. Pyrolyse zersetzten Matrixmaterials kann dann durch Entfernen desselben mit Lösemittel erfolgen.

Bei der vorstehenden Ausführungsform ist es möglich und auch bevorzugt, dass zur Bereitstellung von Recyclat-Carbonfasern dieselben CFK-Abfallteile bzw. CFK-Ausschussteile eingesetzt werden, wie in dem Verfahrensschritt a). In diesem Fall umfasst das erfindungsgemäße Verfahren die folgenden Schritte:
i) Zerkleinern von Abfallteilen und/oder Ausschussteilen aus einem carbonfaserverstärkten Kunststoff, dessen Matrix wenigstens einen Duroplast enthält,
ii) Abtrennen eines Teils des in dem Schritt i) erhaltenen zerkleinerten Produkts, Zersetzen des Matrixmaterials dieses Teils durch Solvolyse oder Pyrolyse und optinales Abtrennen des zersetzen Matrixmaterials von den Carbonfasern, um Recyclat-Carbonfasern zu gewinnen,
iii) Zugabe eines Bindemittels und der in dem Schritt ii) erhaltenen Carbonfasern zu dem Teil des in dem Schritt i) erhaltenen zerkleinerten Produkts, welches keiner Solvolyse oder Pyrolyse unterworfen wurde, und Vermischen dieser Bestandteile, wobei das Bindemittel aus der Gruppe ausgewählt wird, welche aus Duroplastvorläufern, Thermoplasten, Elastomeren, Elastomervorläufern, Duroplasten und beliebigen Mischungen aus zwei oder mehr der vorstehenden Verbindungen besteht, sowie
iv) Formen der in dem Schritt iii) erhaltenen Mischung zu einem Formteil aus CFK.

Bei dieser Ausführungsform werden mithin alle in den CFK-Abfall- bzw. -Ausschussteilen enthaltenen Carbonfasern und ein Teil, bevorzugt ein Großteil, des in den CFK-Abfall- bzw. -Ausschussteilen enthaltenen Duroplastmatrixmaterials wiederverwertet, wohingegen ein Teil, bevorzugt ein kleiner Teil, des Duroplastmatrixmaterials durch Solvolyse oder Pyrolyse zersetzt und von den Carbonfasern abgetrennt wird.

In Weiterbildung des Erfindungsgedankens wird es vorgeschlagen, dass die in dem Verfahrensschritt b) optional eingesetzten Carbonfasern, unabhängig davon, ob es sich um neu hergestellte Carbonfasern oder um Recyclat-Carbonfasern handelt, eine durchschnittliche Faserlänge von 20 µm bis 50 mm und bevorzugt von 50 µm bis 20 mm aufweisen. Wie vorstehend dargelegt, übt die Länge der in dem Verfahrensschritt b) zugesetzten Carbonfasern einen erheblichen Einfluss auf den Anisotropiegrad des Wärmeausdehnungskoeffizienten des mit dem erfindungsgemäßen Verfahren hergestellten Formteils aus. Längere Fasern richten sich bei dem späteren Formen tendenziell stärker in der Richtung senkrecht zu der bei der Formgebung angelegten Pressrichtung aus, weswegen das Formteil bei der Verwendung längerer Carbonfasern einen größeren Anisotropiegrad des Wärmeausdehnungskoeffizienten aufweist als ein durch Verwenden kürzerer Fasern erhaltenes Formteil.

Ferner ist es hervorzuheben, dass die in dem Verfahrensschritt b) optional eingesetzten Carbonfasern einen kleineren Wärmeausdehnungskoeffizienten aufweisen als das in dem Verfahrensschritt b) eingesetzte Bindemittel. Beispielsweise beträgt der Wärmeausdehnungskoeffizienten der in dem Verfahrensschritt b) optional eingesetzten Carbonfasern senkrecht zu der Faserlängsrichtung 3·10⁻⁵ K⁻¹.

Gemäß einer weiteren bevorzugten Ausführungsform der vorliegenden Erfindung wird in dem Verfahrensschritt b) eine Mischung hergestellt, welche, bezogen auf die Gesamtmischung, einen Carbonfaseranteil von 30 bis 80 Gew.-% und bevorzugt von 40 bis 70 Gew.-% aufweist. Der Rest auf 100 Gew.-% besteht aus dem Matrixmaterial der in dem Verfahrensschritt a) erhaltenen zerkleinerten CFK-Teile und dem in dem Verfahrensschritt b) zugesetzten Bindemittel. Bei dieser Ausführungsform werden CFK-Formteile erhalten, welche insbesondere zur Verwendung als Werkzeugform oder bevorzugt als Laminierform insbesondere zur Herstellung von Bauteilen aus carbonfaserverstärktem Kunststoff durch Laminierung von Prepregs geeignete Eigenschaften aufweisen. Zudem kann durch das Verhältnis der Carbonfasern zu dem Matrixmaterial der Wärmeausdehnungskoeffizient auf einen gewünschten Wert eingestellt werden.

Wie dargelegt, kann mit dem erfindungsgemäßen Verfahren eine hohe Recyclingquote erreicht werden. Aus diesem Grund ist es bevorzugt, dass in dem Verfahrensschritt b) eine Mischung hergestellt wird, welche wenigstens 50 Gew.-%, bevorzugt wenigstens 60 Gew.-%, besonders bevorzugt wenigstens 70 Gew.-% und ganz besonders bevorzugt wenigstens 80 Gew.-% von aus Abfallteilen und/oder Ausschussteilen stammenden Bestandteilen, also das in dem Verfahrensschritt a) erhaltene zerkleinerte Produkt und ggf. die Recyclatfasern, enthält.

In Weiterbildung des Erfindungsgedankens wird es vorgeschlagen, dass in dem Verfahrensschritt b) eine Mischung hergestellt wird, welche 40 bis 90 Gew.-% von dem in dem Schritt a) erhaltenen, zerkleinerten Produkt, 10 bis 40 Gew.-% von dem in dem Schritt b) zugesetzten Bindemittel und 0 bis 30 Gew.-% von den in dem Schritt b) zugesetzten Carbonfasern enthält, wobei die Summer der einzelnen Bestandteile selbstverständlich 100 Gew.-% beträgt. Besonders bevorzugt wird in dem Verfahrensschritt b) eine Mischung hergestellt, welche 50 bis 90 Gew.-% von dem in dem Schritt a) erhaltenen, zerkleinerten Produkt, 10 bis 30 Gew.-% von dem in dem Schritt b) zugesetzten Bindemittel und 0 bis 20 Gew.-% von den in dem Schritt b) zugesetzten Carbonfasern enthält, wobei die Summer der einzelnen Bestandteile wiederum 100 Gew.-% beträgt.

Vorzugsweise erfolgt die Formgebung in dem Schritt c) durch uniaxiales Pressen. Wenn in dem Verfahrensschritt b) als Bindemittel ein Duroplastvorläufer und/oder ein Elastomervorläufer eingesetzt wird, wird die Formgebung in dem Schritt c) vorzugsweise so durchgeführt, dass der Duroplastvorläufer bzw. Elastomervorläufer bei der Formgebung aushärtet. Wenn in dem Verfahrensschritt b) als Bindemittel ein Thermoplast eingesetzt wird, wird die Formgebung in dem Schritt c) vorzugsweise so durchgeführt, dass der Thermoplast bei der Formgebung schmilzt. Gute Ergebnisse werden beispielsweise erzielt, wenn die Formgebung in dem Schritt c) bei einer Temperatur zwischen 20 und 250°C und bei einem Druck zwischen 0,1 und 10 MPa, bevorzugt bei einer Temperatur zwischen 60 und 180°C und bei einem Druck zwischen 0,2 und 2 MPa und besonders bevorzugt bei einer Temperatur zwischen 120 und 180°C und bei einem Druck zwischen 0,3 und 1 MPa durchgeführt wird.

Ein weiterer Gegenstand der vorliegenden Erfindung ist ein Formteil, welches mit dem zuvor beschriebenen, erfindungsgemäßen Verfahren erhältlich ist.

Insbesondere betrifft die vorliegende Erfindung ein Formteil aus einem Verbundwerkstoff, welcher eine aus der aus Duroplast, Thermoplast, Elastomer und beliebigen Mischungen aus zwei oder mehr der vorstehenden Verbindungen bestehenden Gruppe ausgewählte Matrix enthält, in der Partikel aus einem carbonfaserverstärkten Kunststoff und ggf. Carbonfasern eingebettet sind. Bei den in die Matrix eingebetteten Partikeln aus einem carbonfaserverstärkten Kunststoff handelt es sich bevorzugt um die zuvor im Rahmen des erfindungsgemäßen Verfahrens beschriebenen zerkleinerten CFK-Abfallteile und/oder CFK-Ausschussteile, welche wie vorstehend dargelegt, bevorzugt eine Länge zwischen 20 µm und 50 mm und besonders bevorzugt zwischen 50 µm und 20 mm aufweisen.

In Weiterbildung des Erfindungsgedankens wird es vorgeschlagen, dass das erfindungsgemäße Formteil einen Wärmeausdehnungskoeffizienten von 0,1 bis 0,5·10⁶/K⁻¹ in der Vorzugsrichtung und von 1 bis 10·10⁻⁶ K⁻¹ senkrecht zu der Vorzugsrichtung und bevorzugt von 0,1 bis 0,3·10⁶/K⁻¹ in der Vorzugsrichtung und von 2 bis 4·10⁻⁶ K⁻¹ senkrecht zu der Vorzugsrichtung aufweist. Die Vorzugsrichtung entspricht hierbei bei einem Uniaxial-Pressverfahren der Richtung senkrecht zu der Pressrichtung und bei einem Extrusionsverfahren der Extrusionsrichtung.

Gemäß einer weiteren bevorzugten Ausführungsform der vorliegenden Erfindung ist auf wenigstens einer Seite des Formteils wenigstens eine Lage bzw. Decklage eines textilen Flächengebildes vorgesehen. Bei dem textilen Flächengebilde kann es prinzipiell sich um jedes bekannte gewebte oder nicht gewebte textile Flächengebilde handeln, wobei insbesondere mit einer Gewebelage und/oder einer Gelegelage gute Ergebnisse erhalten werden. Dabei können das Formteil und das textile Flächengebilde auf jede bekannte Art und Weise miteinander verbunden sein. Lediglich beispielsweise seine Verbindungstechniken, wie Verlaminieren oder Verkleben, genannt.

Ein weiterer Gegenstand der vorliegenden Erfindung ist die Verwendung eines erfindungsgemäßen Formteils als Werkzeugform und bevorzugt als Laminierform, und zwar insbesondere als Laminierform zur Herstellung von Bauteilen aus carbonfaserverstärktem Kunststoff durch Laminierung von Prepregs.

Nachfolgend wird die vorliegende Erfindung anhand von diese erläuternden, diese aber nicht einschränkenden Beispielen weiter beschrieben.

### Beispiel

Abfallteile aus carbonfaserverstärktem Kunststoff aus in einer Epoxidharzmatrix eingebetteten Endlos-Carbonfasern mit einem Fasergehalt von 60 Vol.-% wurden in einem Shredder zu Partikeln mit einer Länge von 20 mm zerkleinert. Ein Teil der so zerkleinerten Partikel wurde für 30 Std. bei bis zu 1.000°C pyrolysiert.

Anschließend wurden 60 Teile nicht pyrolysierte Partikel, 10 Teile der durch Pyrolyse gewonnenen Carbonfasern und 30 Teile Epoxidharzvorläufer für 5 Minuten vermischt und die so erhaltene Mischung wurde für 6 Stunden bei einer Temperatur von 130°C und einem uniaxialen Druck von 0,5 MPa ausgehärtet sowie zu einer Platte mit den Abmessungen 415 mm x 415 mm x 40 mm geformt. Die Teilangaben beziehen sich auf Gewichtsanteile.

Es wurde ein Bauteil erhalten, welches einen Wärmeausdehnungskoeffizienten in der Ebene parallel zu der Pressrichtung von 30·10⁻⁶ /K und einen Wärmeausdehnungskoeffizienten in der Ebene senkrecht zu der Pressrichtung von 5·10⁻⁶ /K, also einen Anisotropiegrad des Wärmeausdehnungskoeffizienten von 6, aufwies.

### Vergleichsbeispiel

Es wurde ein Formteil wie in dem Beispiel beschrieben hergestellt, ausgenommen dass keine Abfallteile bzw. Ausschussteile aus einem carbonfaserverstärkten Kunststoff eingesetzt wurden, sondern eine Mischung aus 60 Teilen Epoxidharzvorläufer und 40 Teilen neu hergestellter Carbonfasern mit einer Länge von 20 mm geformt wurde. Das damit hergestellte Formteil wies einen vergleichbaren Carbonfaseranteil wie das in dem vorhergehenden Beispiel hergestellte Formteil auf.

Es wurde ein Bauteil mit denselben Wärmeausdehnungskoeffizienten und mit demselben Anisotropiegrad des Wärmeausdehnungskoeffizienten wie in dem Beispiel erhalten.

Dies zeigt, dass mit dem erfindungsgemäßen Verfahren unter Wiederverwertung von CFK-Abfallteilen und/oder CFK-Ausschussteilen, deren Matrix Duroplast enthält, CFK-Formteile hergestellt werden können, welche hinsichtlich ihrer Eigenschaften mit aus Neufasern hergestellten CFK-Formteilen identische Eigenschaften aufweisen.

## Patentansprüche

1. Verfahren zur Herstellung eines Formteils aus carbonfaserverstärktem Kunststoff, welches die nachfolgenden Schritte umfasst:
a) Zerkleinern von Abfallteilen und/oder Ausschussteilen aus einem carbonfaserverstärkten Kunststoff, dessen Matrix wenigstens einen Duroplast enthält,
b) Zugabe eines Bindemittels und ggf. von Carbonfasern zu dem in dem Schritt a) erhaltenen, zerkleinerten Produkt und Vermischen der Bestandteile, wobei das Bindemittel aus der Gruppe ausgewählt wird, welche aus Duroplastvorläufern, Thermoplasten, Elastomeren, Elastomervorläufern, Duroplasten und beliebigen Mischungen aus zwei oder mehr der vorstehenden Verbindungen besteht, sowie
c) Formen der in dem Schritt b) erhaltenen Mischung zu einem Formteil aus carbonfaserverstärktem Kunststoff.

2. Verfahren nach Anspruch 1,
**dadurch gekennzeichnet, dass**
das Verfahren keinen Schritt aufweist, in welchem eine Auswahl hinsichtlich des Matrix- und/oder Fasergehalts des in dem Schritt a) eingesetzten bzw. erhaltenen, zerkleinerten Produkts erfolgt.

3. Verfahren nach zumindest einem der vorstehenden Ansprüche,
**dadurch gekennzeichnet, dass**
die Abfallteile oder Ausschussteile aus dem carbonfaserverstärkten Kunststoff in dem Schritt a) vornehmlich zu Partikeln mit einer Länge zwischen 20 µm und 50 mm und bevorzugt zwischen 50 µm und 20 mm zerkleinert werden, wobei vorzugsweise während oder nach dem Zerkleinern aus dem zerkleinerten Produkt Staub ausgesiebt wird, so dass das zerkleinerte Produkt des Verfahrensschritts a) besonders bevorzugt weniger als 5 Gew.-% Staubpartikel mit einer mittleren Partikelgröße von weniger als 100 µm aufweist.

4. Verfahren nach zumindest einem der vorstehenden Ansprüche,
**dadurch gekennzeichnet, dass**
in dem Schritt a) Abfallteile und/oder Ausschussteile aus einem carbonfaserverstärkten Kunststoff eingesetzt werden, der aus 10 bis 80 Vol.-% und bevorzugt 40 bis 60 Vol.-% Carbonfasern und Rest auf 100 Gew.-% Matrix zusammengesetzt ist.

5. Verfahren nach zumindest einem der vorstehenden Ansprüche,
**dadurch gekennzeichnet, dass**
in dem Schritt a) Abfallteile und/oder Ausschussteile aus einem carbonfaserverstärkten Kunststoff eingesetzt werden, dessen Matrix aus Duroplast oder aus einer Mischung aus Duroplast und Thermoplast besteht.

6. Verfahren nach zumindest einem der vorstehenden Ansprüche,
**dadurch gekennzeichnet, dass**
in dem Schritt b) als Bindemittel wenigstens ein Duroplastvorläufer und/oder wenigstens ein Thermoplast eingesetzt wird.

7. Verfahren nach Anspruch 6,
**dadurch gekennzeichnet dass**
der wenigstens eine Duroplastvorläufer wenigstens eines der folgenden enthält:
i) eine Mischung, welche wenigstens ein Monomer, wenigstens einen Katalysator und ggf. wenigstens einen Vernetzer enthält,
ii) eine Mischung, welche wenigstens ein Oligomer, wenigstens einen Katalysator und ggf. wenigstens einen Vernetzer enthält,
iii) eine Mischung, welche wenigstens ein teilvernetztes Polymer, wenigstens einen Katalysator und ggf. wenigstens einen Vernetzer enthält, oder
iv) eine Mischung, welche wenigstens ein Monomer, wenigstens ein Oligomer und/oder wenigstens ein teilvernetztes Polymer, wenigstens einen Katalysator und ggf. wenigstens einen Vernetzer enthält.

8. Verfahren nach zumindest einem der Ansprüche 6 oder 7,
**dadurch gekennzeichnet, dass**
in dem Schritt b) als Bindemittel ein Vorläufer für einen Duroplasten eingesetzt wird, welcher dem in der Matrix des in dem Schritt a) eingesetzten carbonfaserverstärkten Kunststoffs enthaltenen Duroplast entspricht.

9. Verfahren nach zumindest einem der vorstehenden Ansprüche,
**dadurch gekennzeichnet, dass**
dem in dem Schritt a) erhaltenen, zerkleinerten Produkt in dem Schritt b) neu hergestellte Carbonfasern und/oder Recyclat-Carbonfasern zugesetzt werden.

10. Verfahren nach Anspruch 9,
**dadurch gekennzeichnet, dass**
dem in dem Schritt a) erhaltenen, zerkleinerten Produkt in dem Schritt b) Recyclat-Carbonfasern zugesetzt werden, welche hergestellt worden sind, indem Abfallteile und/oder Ausschussteile aus einem carbonfaserverstärkten Kunststoff zerkleinert worden sind, das zerkleinerte Produkt anschließend unter Luftabschluss bei einer Temperatur zwischen 500 und 1.000°C pyrolysiert oder durch Solvolyse zersetzt worden ist und dann optional die zersetzte Matrix des pyrolysierten oder solvolysierten Produkts von den Carbonfasern abgetrennt worden ist.

11. Verfahren nach zumindest einem der vorstehenden Ansprüche,
**dadurch gekennzeichnet, dass**
in dem Schritt b) eine Mischung hergestellt wird, welche, bezogen auf die Gesamtmischung, einen Carbonfaseranteil von 30 bis 80 Gew.-% und bevorzugt von 40 bis 70 Gew.-% aufweist.

12. Verfahren nach zumindest einem der vorstehenden Ansprüche,
**dadurch gekennzeichnet, dass**
in dem Schritt b) eine Mischung hergestellt wird, welche wenigstens 50 Gew.-%, bevorzugt wenigstens 60 Gew.-%, besonders bevorzugt wenigstens 70 Gew.-% und ganz besonders bevorzugt wenigstens 80 Gew.-% von aus Abfallteilen und/oder Ausschussteilen stammenden Bestandteilen enthält.

13. Verfahren nach zumindest einem der vorstehenden Ansprüche,
**dadurch gekennzeichnet, dass**
in dem Schritt b) eine Mischung hergestellt wird, welche 40 bis 90 Gew.-% von dem in dem Schritt a) erhaltenen, zerkleinerten Produkt, 10 bis 40 Gew.-% von dem in dem Schritt b) zugesetzten Bindemittel und 0 bis 30 Gew.-% von den in dem Schritt b) zugesetzten Carbonfasern enthält, und welche bevorzugt 50 bis 90 Gew.-% von dem in dem Schritt a) erhaltenen, zerkleinerten Produkt, 10 bis 30 Gew.-% von dem in dem Schritt b) zugesetzten Bindemittel und 0 bis 20 Gew.-% von den in dem Schritt b) zugesetzten Carbonfasern enthält.

14. Formteil erhältlich mit einem Verfahren nach zumindest einem der vorstehenden Ansprüche.

15. Formteil nach Anspruch 14, welches einen Wärmeausdehnungskoeffizienten von 0,1 bis 0,5·10⁶/K⁻¹ in der Vorzugsrichtung und von 1 bis 10·10⁻⁶ K⁻¹ senkrecht zu der Vorzugsrichtung und bevorzugt von 0,1 bis 0,3·10⁶/K⁻¹ in der Vorzugsrichtung und von 2 bis 4·10⁻⁶ K⁻¹ senkrecht zu der Vorzugsrichtung aufweist.

16. Formteil nach zumindest einem der Ansprüche 14 oder 15, wobei auf wenigstens einer Seite des Formteils wenigstens eine Lage eines textilen Flächengebildes, welches vorzugsweise ein Gewebe oder Gelege ist, vorgesehen ist, wobei die wenigstens eine Lage des textilen Flächengebildes mit dem Formteil bevorzugt verlaminiert oder verklebt ist.

17. Verwendung eines Formteils nach zumindest einem der Ansprüche 20 bis 23 als Werkzeugform und bevorzugt als Laminierform.
